# EUROPÄISCHE PATENTSCHRIFT

(11) **EP 0 463 306 B1**
(45) Veröffentlichungstag und Bekanntmachung des Hinweises auf die Patenterteilung: **12.01.1994**
(21) Anmeldenummer: 91105952.5
(22) Anmeldetag: 15.04.1991
(51) Int. Cl.: B60N 3/10

(54) **Halter für Getränkedosen als Teil eines in ein Kraftfahrzeug einsetzbaren Aufbewahrungssystems**
Holder for beverage cans as part of a storage system, which can be placed in a car
Support pour boîtes de boissons comme élément d'un système de stockage, pouvant être placé dans un véhicule automobile

(30) Priorität: 16.06.1990 DE 9006776 U
(43) Veröffentlichungstag der Anmeldung: 02.01.1992
(73) Patentinhaber: fischerwerke Artur Fischer GmbH & Co. KG, D-72178 Waldachtal (DE)
(72) Erfinder: Döring, Joachim, W-3180 Wolfsburg 1 (DE)

(56) Entgegenhaltungen:
- US-A- 4 583 707
- US-A- 4 733 908
- US-A- 4 826 058
- US-A- 4 953 771
- US-A- 4 981 277

## Beschreibung

Die Erfindung betrifft einen Kalter für Getränkedosen als Teil eines in ein Kraftfahrzeug einsetzbaren Aufbewahrungssystems gemäß der Gattung des Hauptanspruchs.

Zum Halten von Getränkedosen in Kraftfahrzeugen können spezielle Halterungen verwendet werden, die einen die Dose umschließenden Rand und einen Tiefenanschlag für die Dose aufweisen. Vielfach besteht jedoch das Problem daß für derartige Dosenhalter kein geeigneter Platz vorhanden ist. Außerdem sollte der Dosenhalter nach Gebrauch möglichst problemlos entfernt bzw. aufgeräumt werden können. Zu diesem Zweck können in ein Gehäuse einschiebbare Schieber mit Aufnahmeöffnungen für die Getränkedosen verwendet werden. Eine bekannte Ausführung verwendet einen verhältnismäßig breiten Schieber, der zwei nebeneinanderliegende Aufnahmeöffnungen für Getränkedosen besitzt. Die Breite des Schiebers wird dabei durch die Abmessungen der handelsüblichen 0,331-Dosen bestimmt. Der breite Schieber erfordert ein entsprechend großes Gehäuse für die Aufnahme des Schiebers, so daß aufgrund des erforderlichen großen Platzbedarfs die Einsatzmöglichkeiten dieser bekannten Ausführung stark eingeschränkt sind.

Der Erfindung liegt die Aufgabe zugrunde, einen Halter für Getränkedosen zu schaffen, der in seinen Abmessungen an die herkömmlichen Aufbewahrungssysteme für Tonbandkassetten angepaßt werden kann.

Die Lösung dieser Aufgabe wird durch die im Hauptanspruch angegebenen Merkmale erhalten. Durch die einseitig offenen, C-förmig ausgebildeten Aufnahmeöffnungen ist es möglich, zwei nebeneinanderliegende Aufnahmeöffnungen auf einem verhältnismäßig schmalen Schieber unterzubringen, der im wesentlichen die Abmessungen einer handelsüblichen Tonbandkassette haben kann. Die Aufnahmeöffnungen umgreifen die eingesetzten Dosen über einen Winkel von deutlich mehr als 180°, so daß die Getränkedosen gegen seitliches Umkippen allseitig ausreichend gesichert sind.

Besonders vorteilhaft ist es, den C-förmigen Rand mit einer möglichst großen Höhe auszubilden, damit dieser Rand die im Durchmesser angepaßte Dose geradehält. Je höher der Rand, desto besser wird die von ihm umgriffene Dose senkrecht gehalten.

Als Tiefanschlag, an dem die jeweils eingesetzten Getränkedosen mit ihrem Boden anliegen, wird vorzugsweise ein einziger schwenkbarer Steg verwendet, der an seiner dem Dosenboden zugewandten Oberseite einen Antirutschbelag besitzt.

Eine Weiterbildung des erfindungsgemäßen Halters sieht vor, daß der Schieber ein teleskopartig nach oben ausfahrbares Oberteil hat, an dem die C-förmigen Aufnahmeöffnungen ausgebildet sind, und daß der Schieberboden den Tiefenanschlag bildet. Das teleskopartig ausfahrbare Oberteil hat den Vorteil, daß der für die Seitenführung wirksame Rand der C-förmigen Aussparung wesentlich höher sein kann, als die Innenhöhe des Gehäuses. Die Seitenführung der Getränkedosen wird dadurch deutlich verbessert.

Die Erfindung wird nachfolgend anhand der Zeichnung näher erläutert.

Es zeigen:
Figur 1 ein erstes Ausführungsbeispiel mit einem Schieber mit C-förmigen Aufnahmeöffnungen und
Figur 2 ein zweites Ausführungsbeispiel mit einem am Schieber teleskopartig nach oben ausfahrbaren Oberteil mit C-förmigen Aufnahmeöffnungen.

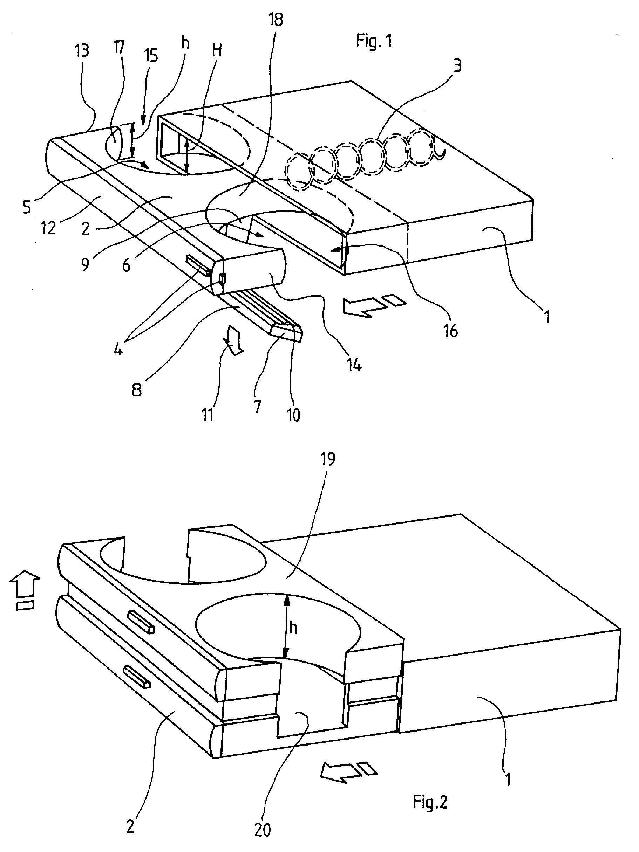

Der in Figur 1 dargestellte Halter besitzt ein einseitig offenes Gehäuse 1, in das ein Schieber 2 gegen die Kraft einer Druckfeder 3 einschiebbar ist. Mittels einer Verriegelungseinrichtung 4 kann der Schieber 2 in der nicht dargestellten eingeschobenen Stellung lösbar verriegelt werden. In Figur 1 ist der Schieber noch nicht vollständig aus dem Gehäuse herausgeschoben, weshalb die am Schieber 2 ausgebildeten C-förmigen Aufnahmeöffnungen 5,6 nur teilweise sichtbar sind.

Sobald der Schieber 2 so weit aus dem Gehäuse 1 herausgeschoben ist, daß beide Aufnahmeöffnungen 5,6 vollständig freiliegen, können in beide Aufnahmeöffnungen 5,6 im Durchmesser angepaßte Getränkedosen von oben eingesetzt werden. Damit die Getränkedosen nicht nach unten aus den Aufnahmeöffnungen 5,6 herausrutschen, ist ein schwenkbarer Tiefenanschlag 7 vorgesehen. Der Tiefenanschlag 7 besteht aus einem waagerechten Steg 8, der an einem Schwenkbügel 9 absteht. An der Oberseite des Steges 8 befindet sich ein Antirutschbelag 10. Beim Einschieben des Schiebers 2 in das Gehäuse 1 wird der Tiefenanschlag 7 entgegen der Pfeilrichtung 11 nach oben hinter die Frontblende 12 geschwenkt.

Die C-förmigen Aufnahmeöffnungen 5,6 besitzen an den gegenüberliegenden Schmalseiten 13,14 des Schiebers 2 jeweils eine offene Seite 15,16. Da der Rand 17,18 beider Aufnahmeöffnungen 5,6 über einen deutlich größeren Winkel als 180° verläuft, wird eine in die Aufnahmeöffnungen 5,6 eingesetzte Getränkedose sicher gehalten. Die Höhe h beider Ränder 17,18 entspricht praktisch der Innenhöhe H des Gehäuses 1.

In Figur 2 ist eine Ausführung mit einem teleskopartig nach oben ausfahrbaren Oberteil 19 dargestellt, wodurch die wirksame Höhe h deutlich größer wird und somit eine Verbesserung der Seitenführung der eingesetzten Getränkedosen erreicht wird. Das Oberteil 19 läßt sich durch Druck von oben gegen die Kraft eines hier nicht dargestellten Federelements niederdrücken und rastet am Schieber 2 ein, so daß dieser dann in das Gehäuse 1 einschiebbar ist.

Bei der in Figur zwei dargestellten Ausführungsform bildet der Schieberboden (20) den Tiefenanschlag, der ebenfalls wie bei der Ausführung gemäß Figur 1 mit einem Antirutschbelag versehen sein kann.

## Patentansprüche

1. Halter für Getränkedosen als Teil eines in ein Kraftfahrzeug einsetzbaren Aufbewahrungssystems für Tonbandkassetten oder dergleichen, bestehend aus einem einseitig offenen Gehäuse (1) und einem an der offenen Seite des Gehäuses gegen eine Federkraft (3) einschiebbaren Schieber (2), an dem zwei nebeneinanderliegende Aufnahmeöffnungen (5,6) für Getränkedosen ausgebildet sind, **dadurch** **gekennzeichnet,** daß die Aufnahmeöffnungen (5,6) jeweils von einem einseitig offenen C-förmigen Rand (17,18) begrenzt sind, wobei die offenen Seiten (15,16) der Aufnahmeöffnungen (5,6) sich jeweils an gegenüberliegenden Schmalseiten (13,14) des Schiebers (2) befinden.

2. Halter nach Anspruch 1, **dadurch gekennzeichnet**, daß der C-förmige Rand (17,18) im Durchmesser an die daran einzusetzenden Getränkedosen angepaßt ist und eine Höhe (h) hat die gleich oder nur geringfügig kleiner ist als die Innenhöhe (H) des Gehäuses (1).

3. Halter nach einem der Ansprüche 1 oder 2, **dadurch** **gekennzeichnet,** daß ein aus der Schieberebene unter die Aufnahmeöffnungen (5,6) verschwenkbarer Tiefenanschlag (7) vorgesehen ist, der von einem einzigen, an einem Schwenkbügel (9) abstehenden waagrechten Steg (8) gebildet ist, dessen Länge gleich oder kleiner ist als die Breite des Schiebers (2).

4. Halter nach Anspruch 3, **dadurch gekennzeichnet**, daß die den Aufnahmeöffnungen (5,6) zugewandte Oberseite des Tiefenanschlags (7) mit einem Antirutschbelag (10) versehen ist.

5. Halter nach einem der vorhergehenden Ansprüche, **dadurch** **gekennzeichnet,** daß der Schieber (2) ein teleskopartig nach oben ausfahrbares Oberteil (19) hat, an dem die C-förmigen Aufnahmeöffnungen (5,6) ausgebildet sind, und daß der Schieberboden (20) den Tiefenanschlag bildet.

## Claims

1. A holder for drink cans as part of a storage system for use in a motor vehicle for magnetic tape cassettes or the like, comprising a housing open on one side and a slider member arranged to be inserted at the open side of the housing against a spring force, on which slider member there are formed side by side two receiving openings for drink cans, characterized in that each storage opening (5, 6) is limited by a C-shaped rim (17, 18) open at one side, the open sides (15, 16) of the receiving openings (5, 6) being positioned at respective opposing narrow sides (13, 14) of the slider member (2).

2. A holder according to claim 1, characterized in that the C-shaped rim (17, 18) is matched in diameter to the drink cans to be positioned against it, and has a height (h) that is the same as or only slightly less than the internal height (H) of the housing (1).

3. A holder according to one of claims 1 and 2, characterized in that there is provided a depth stop (7) pivotable out of the plane of the slider member to beneath the receiving openings (5, 6), which is formed by a single horizontal bar (8) projecting from a pivot arm (9), the length of which bar (8) is the same as or less than the width of the slider member (2).

4. A holder according to claim 3, characterized in that the upper side of the depth stop (7) facing the receiving openings (5, 6) is provided with a non-slip coating (10).

5. A holder according to one of the preceding claims, characterized in that the slider member (2) has an upper part (19), capable of being extended upwardly telescope-fashion, in which the C-shaped receiving openings are formed, and the slider member base (20) forms the depth stop.

## Revendications

1. Support pour boîtes de boissons constituant un élément d'un système de stockage susceptible d'être mis en place dans un véhicule automobile, destiné à des cassettes audio ou similaires, constitué par un corps (1) ouvert d'un côté et par un tiroir (2) susceptible d'être introduit du côté ouvert du corps à l'encontre d'une force (3) de ressort, sur lequel sont conformées deux ouvertures (5,6) situées l'une à côté de l'autre pour recevoir des boîtes de boissons, support caractérisé par le fait que les ouvertures de réception (5,6) sont chacune délimitées par un bord (17,18) en forme de C ouvert d'un côté, les côtés ouverts (15,16) des ouvertures de réception (5,6) se trouvant dans chaque cas sur les côtés étroits (13,14) opposés du tiroir (2).

2. Support selon la revendication 1, caractérisé par le fait que le bord (17,18) en forme de C a un diamètre adapté aux boîtes de boisson qui doivent y être mises en place, et une hauteur (h) qui est égale ou seulement très peu inférieure à la hauteur intérieure (11) du corps (1).

3. Support selon l'une des revendications 1 ou 2, caractérisé par le fait que l'on prévoit une butée de profondeur (7) susceptible d'être déplacée par pivotement à partir du plan du tiroir jusque sous les ouvertures de réception (5,6) et qui est formée par une barrette horizontale unique faisant saillie sur un étrier pivotant (9), la longueur de celle-ci étant égale ou inférieure à la largeur du tiroir (2).

4. Support selon la revendication 3 caractérisé par le fait que la partie supérieure de la butée de profondeur (7) orientée vers les ouvertures de réception (5,6) est munie d'un revêtement anti-glissement (10).

5. Support selon l'une quelconque des revendications précédentes, caractérisé par le fait que le tiroir (2) comporte une partie supérieure susceptible d'être déployée télescopiquement vers le haut, sur laquelle sont conformés les ouvertures de réception (5,6) en forme de C, et en ce que le fond (20) du tiroir forme la butée de profondeur.
